# EUROPEAN PATENT APPLICATION

(11) **EP 4 328 815 A1**
(43) Date of publication of application: **28.02.2024**
(21) Application number: 21937380.0
(22) Date of filing: 23.04.2021
(51) Int. Cl.: G06N 20/20, G06F 21/62

(54) **FEDERATED LEARNING METHOD, FEDERATED LEARNING SYSTEM, FIRST DEVICE, AND THIRD DEVICE**

(71) Applicant: GUANGDONG OPPO MOBILE TELECOMMUNICATIONS CORP., LTD., Dongguan, Guangdong 523860 (CN)
(72) Inventor: CHEN, Jingran, Dongguan, Guangdong 523860 (CN); XU, Yang, Dongguan, Guangdong 523860 (CN)
(74) Representative: Novagraaf Technologies
(86) International application number: PCT/CN2021/089428
(87) International publication number: WO 2022/222152

(57) **Abstract**

The present application relates to a federated learning method, a federated learning system, a first device, a third device, a chip, a computer-readable storage medium, a computer program product, and a computer program. The method comprises: a first device sends a first key to a second device, wherein the first key is used for encrypting reasoning information of a second model in the second device to obtain first encrypted reasoning information; and the first device obtains target information on the basis of reasoning information of a first model in the first device and second encrypted reasoning information when receiving the second encrypted reasoning information corresponding to the first encrypted reasoning information. Using embodiments of the present application can improve the privacy and security of data.

## Description

### TECHNICAL FIELD

The present disclosure relates to the field of communication, and more specifically, relates to a federated learning method, a federated learning system, a first device, a third device, a chip, a computer-readable storage medium, a computer program product, and a computer program.

### BACKGROUND

In order to train an artificial intelligence model with strong generalization ability, it is necessary to use feature data of multiple dimensions. The feature data is usually distributed on various nodes such as a mobile terminal, an edge server, a network device, and an Over the Top (OTT) third-party application server. As data of multiple nodes is shared across domains and feature data of different dimensions of multiple nodes is combined for model training, an ability of the model may be improved, which is of great significance for model training.

However, sharing multi-domain data of multiple nodes may bring great challenges to data privacy. In order to use the data of the multiple nodes efficiently and accurately on the premise of meeting data privacy, security requirement, and regulatory requirement, a federated learning scheme is proposed in the related art. How to improve data privacy security in a multi-party interaction process of the federated learning is a hot issue in the related art.

### SUMMARY

Some embodiments of the present disclosure provide a federated learning method, a federated learning system, a first device, a third device, a chip, a computer-readable storage medium, a computer program product, and a computer program, which may improve data privacy security.

Some embodiments of the present disclosure provide a federated learning method, including: sending, by a first device, a first key to a second device, wherein the first key is configured to encrypt inference information of a second model in the second device to obtain first encrypted inference information; and obtaining, by the first device, target information based on inference information of a first model in the first device and second encrypted inference information corresponding to the first encrypted inference information, in response to receiving the second encrypted inference information.

Some embodiments of the present disclosure also provide a federated learning method, including: receiving, by a third device, first encrypted inference information from an i^{th} electronic device of N electronic devices, wherein the first encrypted inference information is obtained by the i^{th} electronic device encrypting inference information of a second model in the i^{th} electronic device based on a first key sent from a first device; N is an integer greater than or equal to 2, and i is an integer greater than or equal to 1 and less than or equal to N; determining, by the third device, second encrypted inference information corresponding to the first encrypted inference information based on the first encrypted inference information, and transmitting, by the third device, the second encrypted inference information to the first device, wherein the second encrypted inference information is configured to indicate the first device to obtain target information based on inference information of a first model in the first device and the second encrypted inference information.

Some embodiments of the present disclosure also provide a federated learning system, including: a first device, configured to send a first key; and a second device, configured to receive the first key, encrypt inference information of a second model in the second device by using the first key, and obtain first encrypted inference information; wherein the first device is further configured to obtain target information based on inference information of a first model in the first device and second encrypted inference information corresponding to the first encrypted inference information in response to receiving the second encrypted inference information.

Some embodiments of the present disclosure also provide a first device, including: a first communication module, configured to send a first key to a second device, wherein the first key is configured to encrypt inference information of a second model in the second device to obtain first encrypted inference information; and a first processing module, configured to obtain target information based on inference information of a first model in the first device and second encrypted inference information corresponding to the first encrypted inference information in response to the first device receiving the second encrypted inference information.

Some embodiments of the present disclosure also provide a third device, including: a second communication module, configured to receive first encrypted inference information from an i^{th} electronic device of N electronic devices, wherein the first encrypted inference information is obtained by the i^{th} electronic device encrypting inference information of a second model in the i^{th} electronic device based on a first key sent from a first device; N is an integer greater than or equal to 2, and i is an integer greater than or equal to 1 and less than or equal to N; a second processing module, configured to determining, by the third device, second encrypted inference information corresponding to the first encrypted inference information based on the first encrypted inference information; and the second communication module is further configured to transmit the second encrypted inference information to the first device, wherein the second encrypted inference information is configured to indicate the first device to obtain target information based on inference information of a first model in the first device and the second encrypted inference information.

Some embodiments of the present disclosure also provide a first device, including a processor and a memory, wherein the memory is configured to store a computer program, the processor is configured to call and run the computer program stored in the memory, and execute the aforesaid federated learning method.

Some embodiments of the present disclosure also provide a third device, including a processor and a memory, wherein the memory is configured to store a computer program, the processor is configured to call and run the computer program stored in the memory, and execute the aforesaid federated learning method.

Some embodiments of the present disclosure also provide a chip, including: a processor, configured to call a computer program from a memory and run the computer program, to enable a device equipped with the chip to execute the aforesaid federated learning method.

Some embodiments of the present disclosure also provide a computer-readable storage medium, configured to store a computer program, wherein the computer program is configured to enable a computer to execute the aforesaid federated learning method.

Some embodiments of the present disclosure also provide a computer program product, including a computer program instruction, wherein the computer program instruction is configured to enable a computer to execute the aforesaid federated learning method.

Some embodiments of the present disclosure also provide a computer program, configured to enable a computer to execute the aforesaid federated learning method.

In some embodiments of the present disclosure, the second device may encrypt the inference information of the second model therein to obtain the first encrypted inference information, and the first device may obtain the target information based on the second encrypted inference information corresponding to the first encrypted inference information and the inference information of the first model in the first device. Therefore, the first device and the second device may participate in the federated learning based on their own models and infer the target information. In the process of inferring and obtaining the target information, the first device may send the key and process the second encrypted inference information obtained by encrypting. Therefore, it is implemented that the participant of the inference process may manage the key, and thus, relevant data being decrypted by other nodes may be avoided, and the data privacy security may be improved.

### BRIEF DESCRIPTION OF THE DRAWINGS

FIG. 1 is a schematic diagram of a model training process of a longitudinal federated learning according to some embodiments of the present disclosure.
FIG. 2 is a schematic diagram of a model inference process of a longitudinal federated learning according to some embodiments of the present disclosure.
FIG. 3 is a system architecture diagram of a terminal device accessing a mobile network according to some embodiments of the present disclosure.
FIG. 4A is a schematic diagram of an interface between a NWDAF network element and other network elements.
FIG. 4B is a schematic diagram of an interface between a NWDAF network element and other network elements.
FIG. 5 is a flow chart of a federated learning method according to some embodiments of the present disclosure.
FIG. 6 is an interactive flow chart of a federated learning method according to some embodiments of the present disclosure.
FIG. 7 is an interactive flow chart of a federated learning method according to some embodiments of the present disclosure.
FIG. 8 is an interactive flow chart of a federated learning method according to some embodiments of the present disclosure.
FIG. 9 is an interactive flow chart of a federated learning method according to some embodiments of the present disclosure.
FIG. 10 is a scene diagram of a federated learning training process according to some application examples of the present disclosure.
FIG. 11 is an interactive flow chart of a federated learning training process according to some application examples of the present disclosure.
FIG. 12 is a scene diagram of a federated learning inference process according to some application examples of the present disclosure.
FIG. 13 is an interactive flow chart of a federated learning inference process according to some application examples of the present disclosure.
FIG. 14 is a scene diagram of a federated learning training process according to some application examples of the present disclosure.
FIG. 15 is an interactive flow chart of a federated learning training process according to some application examples of the present disclosure.
FIG. 16 is a scene diagram of a federated learning inference process according to some application examples of the present disclosure.
FIG. 17 is an interactive flow chart of a federated learning inference process according to some application examples of the present disclosure.
FIG. 18 is a scene diagram of a federated learning training process according to some application examples of the present disclosure.
FIG. 19 is an interactive flow chart of a federated learning training process according to some application examples of the present disclosure.
FIG. 20 is a schematic block diagram of a federated learning system according to some embodiments of the present disclosure.
FIG. 21 is a schematic block diagram of a federated learning system according to some embodiments of the present disclosure.
FIG. 22 is a schematic block diagram of a first device according to some embodiments of the present disclosure.
FIG. 23 is a schematic block diagram of a third device according to some embodiments of the present disclosure.
FIG. 24 is a schematic block diagram of a communication device according to some embodiments of the present disclosure.
FIG. 25 is a schematic block diagram of a chip according to some embodiments of the present disclosure.

### DETAILED descriptions

The technical solutions of some embodiments of the present disclosure will be described below in combination with figures in some embodiments of the present disclosure.

It should be understood that, the terms "system" and "network" in the present disclosure are often used interchangeably. In the present disclosure, the term "and/or" is used to describe an associated relationship between associated objects. For example, there may be three types of relationships between the associated objects before and after. For example, A and/or B, may indicate three situations: A exists alone, A and B exists at the same time, and B exists alone. In the present disclosure, the character "/" may indicate that the relationship between the associated objects before and after is "or".

It should be understood that, the "indicate" mentioned in some embodiments of the present disclosure may be a direct indication, an indirect indication, or a representation of an associated relationship. For example, A indicates B, may indicate that A indicates B directly, for example, B may be obtained through A, may indicate that A indicates B indirectly, for example, A indicates C, and B may be obtained through C, and may also indicate that there is an associated relationship between A and B.

In the description of some embodiments of the present disclosure, the terms "first", "second", "third", etc., are only used for the describing purpose of distinguishing the same or similar technical features and cannot be understood as indicating or implying the relative importance or implicitly indicating the number of technical features indicated, nor are they used to describe the order or time sequence. The terms may be interchanged in an appropriate situation. Therefore, the features defined with "first" or "second" may explicitly or implicitly include at least one of the features.

In the description of some embodiments of the present disclosure, the term "corresponding to" may indicate that there is a direct or indirect correspondence between two objects, may indicate that there is an associated relationship between two objects, or may indicate a relationship of indicating or being indicated, configuring or being configured, and so on.

The technical solution of some embodiments of the present disclosure may be applied to longitudinal federated learning. A process of the longitudinal federated learning may be realized based on interaction of nodes in various communication systems. For example, the communication systems may include a Global System of Mobile communication (GSM) system, a Code Division Multiple Access (CDMA) system, a Wideband Code Division Multiple Access (WCDMA) system, a General Packet Radio Service (GPRS) system, a Long Term Evolution (LTE) system, an Advanced Long Term Evolution (LTE-A) system, a New Radio (NR) system, an evolution system of the NR system, a LTE-based access to unlicensed spectrum (LTE-U) system, a NR-based access to unlicensed spectrum (NR-U) system, a Non Terrestrial Networks (NTN) system, a Universal Mobile Telecommunications System (UMTS), a Wireless Local Area Networks (WLAN), a Wireless Fidelity (WiFi), a 5th-Generation (5G) system, or other communication systems.

Generally speaking, a traditional communication system supports a limited number of connections and is easy to be realized. However, with the development of communication technology, a mobile communication system will not only support a traditional communication, but also support, for example, a device to device (D2D) communication, a machine to machine (M2M) communication, a Machine Type Communication (MTC), a Vehicle to Vehicle (V2V) communication, or a Vehicle to everything (V2X) communication, etc. Some embodiments of the present disclosure may also be applied to these communication systems.

The communication system may include multiple nodes, such as a terminal device, a network device, functional network elements in a core network, an OTT server, etc. The terminal device may also be called User Equipment (UE), access terminal, user unit, user station, mobile station, mobile platform, remote station, remote terminal, mobile device, user terminal, terminal, wireless communication device, user agent, or user apparatus.

The terminal device may be a station (ST) in the WLAN, which may be a cellular phone, a Cordless telephone, a Session Initiation Protocol (SIP) phone, a Wireless local loop (WLL) station, a Personal Digital Assistant (PDA) device, a handheld device with wireless communication function, a computing device, or other processing devices, on-board devices, wearable devices, terminal devices in a next-generation communication system such as a NR network, or terminal devices in a future evolution Public Land Mobile Network (PLMN) network, which are connected to wireless modems.

In some embodiments of the present disclosure, the terminal device may be deployed on the land, including indoor or outdoor, handheld, wearable, or on-board. The terminal device may also be deployed on the water (such as a ship and so on). The terminal device may also be deployed in the air (such as an aircraft, a balloon, a satellite, and so on).

In some embodiments of the present disclosure, the terminal device may be a Mobile Phone, a Pad, a computer with wireless transceiver function, a Virtual Reality (VR) terminal device, an Augmented Reality (AR) terminal device, a wireless terminal device in industrial control, a wireless terminal device in self-driving, a wireless terminal device in remote medical, a wireless terminal device in smart grid, a wireless terminal device in transportation safety, a wireless terminal device in smart city, or a wireless terminal device in smart home, and so on.

As an example, but not a limitation, in some embodiments of the present disclosure, the terminal device may also be a wearable device. The wearable device may also be referred to as a wearable smart device, which is a generic term of wearable devices obtained through intelligent designing and development on daily wearing products with wearable technology, such as glasses, gloves, watches, clothes, accessories, and shoes. The wearable device is a portable device that may be directly worn or integrated into clothes or accessories of a user. In addition to being a hardware device, the wearable device may also realize various functions through software support, data interaction, and cloud interaction. A wearable smart device in a broad sense includes, for example, a smart watch, a smart glass, and so on, with fully functions, large sizes, and capable of realizing all or part of functions without relying on a smart phone, and for example, various types of smart bands, smart jewelries, and so on, for physical monitoring, which is dedicated to application functions of a certain type and required to be used together with other devices such as a smart phone.

In some embodiments of the present disclosure, the network device may be a device configured to communicate with a mobile device. The network device may be an access point (AP) in the WLAN, a Base Transceiver Station (BTS) in the GSM or CDMA, a Node B (NB) in the WCDMA, an Evolutional Node B (eNB or eNodeB), a relay station, or an AP in the LTE, an on-board device, a wearable device, a next generation Node B (gNB) in the NR network, a network device in the future evolution PLMN network, or the like.

As an example, but not a limitation, in some embodiments of the present disclosure, the network device may be of mobility. For example, the network device may be a mobile device. In some embodiments, the network device may be a satellite or a balloon station. For example, the satellite may be a Low Earth Orbit (LEO) satellite, a Medium Earth Orbit (MEO) satellite, a Geostationary Earth Orbit (GEO) satellite, a High Elliptical Orbit (HEO) satellite, etc. In some embodiments, the network device may also be a base station located on land, water, etc.

In order to understand the technical solution of some embodiments of the present disclosure, related technologies of some embodiments of the present disclosure are described below. The following related technologies may be combined with the technical solution of some embodiments of the present disclosure in any way, which belong to a protection scope of some embodiments of the present disclosure.

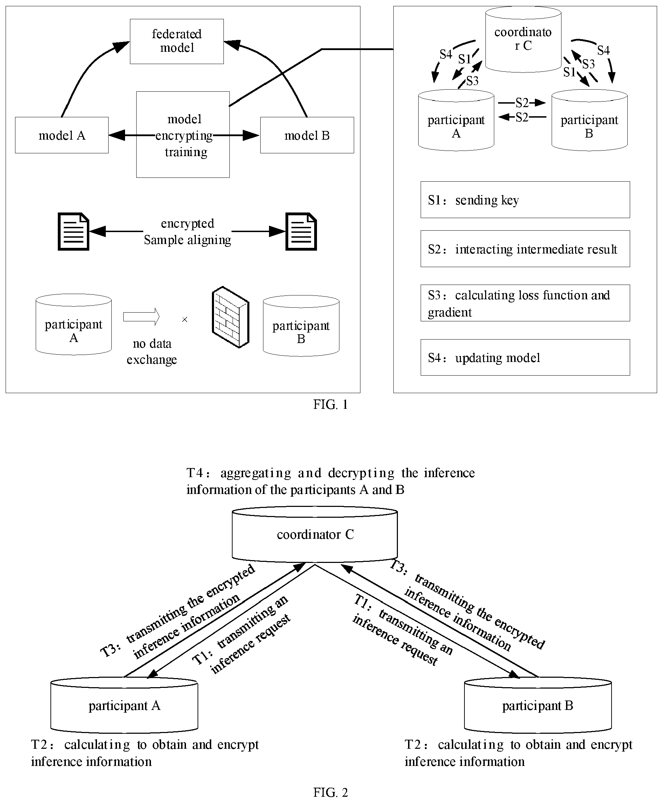

Some embodiments of the present disclosure are used for longitudinal federated learning, which includes a model training process and a model inference process. Herein, the model may referto an Al model, such as a deep neural network model. Generally, as shown in FIG. 1, a model training process of the longitudinal federated learning includes the following operations.

### 1. Encrypted sample aligning

The longitudinal federated learning is applicable to a situation in which multiple participants have training samples corresponding to multiple identical Identifiers (ids), but with different feature dimensions. That is, the training samples provided by the multiple participants have a lot of overlapped ids, but less overlapped data feature types. For example, a UE in a certain area may generate different feature data at different nodes of a communication system, and the longitudinal federated learning may be performed by combining feature data of the UE at different nodes. Therefore, it is necessary to align training samples of various participants and increase feature dimensions of the samples without increasing the sample ids.

### 2. Model encrypting training

The model encrypting training is performed based on the aligned samples, and includes the following operations.

S 1: sending key. A third-party coordinator C may send a key to a participant A and a participant B to encrypt data that needs to be transmitted. An encrypting manner may be, for example, homomorphic encryption. A result of performing homomorphic encryption on two samples m1 and m2 is equal to a sum of a result of performing homomorphic encryption on m1 and a result of performing homomorphic encryption on m2. In addition, a result of performing homomorphic encryption on a product of a sample m and a constant is equal to a product of the constant and a result of performing homomorphic encryption on the sample m.

S2: interacting intermediate result. In the longitudinal federated learning, a participant having sample labels is an active party, such as the participant B shown in the figures. The other participants are data providers, which may be called passive parties without sample labels. The participant A may calculate an intermediate result related to local data thereof based on a model A, the participant B may calculate an intermediate result related to local data thereof based on a model B, and the participant A and the participant B may interact in an encrypted manner.

S3: calculating loss function and gradient. Through interaction of the intermediate results between the passive party A and the active party B, the loss function of the federated model, i.e., the model A and the model B as a whole, may be calculated based on the sample labels of the active party. According to the loss function, the passive party A may calculate an encrypted gradient based on the model A, add a mask to the encrypted gradient, and send the masked gradient to the coordinator C, and the active party B may calculate an encrypted gradient based on the model B, add a mask to the encrypted gradient, and send the masked gradient to the coordinator C. Meanwhile, the active party B may determine the encrypted loss function and send the encrypted loss function to the coordinator C.

S4: updating model. The coordinator C may decrypt and send the loss function and the gradient back to the participants A and B respectively. After removing the mask, the participants A and B may update their own models, respectively.

As shown in FIG. 2, a model inference process of the longitudinal federated learning may include the following operations.

T1: the coordinator C may transmit an inference request to the participants A and B, respectively. The inference request may be configured to indicate a model ID required to be used and input information required for inference to the participants A and B.

T2: the participants A and B may calculate to obtain and encrypt inference information, based on respective data and a locally stored model, respectively.

T3: the participants A and B may transmit the encrypted inference information to the coordinator C, respectively.

T4: the coordinator C may aggregate the inference information of the participants A and B to obtain and decrypt an encrypted inference result.

The training process and inference process of the longitudinal federated learning may be realized based on a 5G network architecture.

A most important character of the 5G network architecture is being a service-oriented architecture. In the service-oriented architecture, a network element of a core network may operate as a service provider, which may provide specific service, and may be called by other network elements through a defined Application Programming Interface (API). Herein, the network element of the core network may also be called a node of the core network.

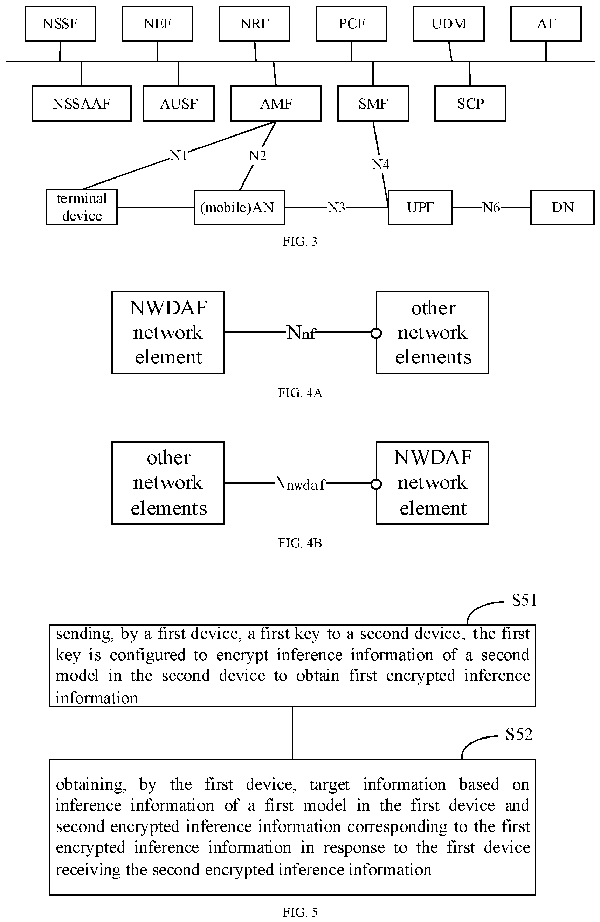

FIG. 3 shows a system architecture in which a terminal device (e.g. UE) accesses a mobile network. The system architecture may include at least one of: a Network Slice Selection Function (NSSF) network element, a Network Exposure Function (NEF) network element, a Network Repository Function (NRF) network element, a Policy Control Function (PCF) network element, an Unified Data Management (UDM) network element, an Application Function (AF) network element, a Network Slice Specific Authentication and Authorization Function (NSSAAF) network element, an Authentication Server Function (AUSF) network element, an Access and Mobility Management Function (AMF) network element, a Session Management Function (SMF) network element, a Service Communication Proxy (SCP) network element, a terminal device, a (Radio) Access Network ((R)AN), a User Plane Function (UPF) network element, a Data Network (DN).

In the system architecture, an interface N1 is a reference point between the terminal device and the AMF entity. An interface N2 is a reference point between the AN and the AMF network element, and configured to transmit a Non-Access Stratum (NAS) message, and so on. An interface N3 is a reference point between the (R)AN and the UPF network element, and configured to transmit user plane data, and so on. An interface N4 is a reference point between the SMF network element and the UPF network element, and configured to transmit tunnel identification information, data cache indication information, downlink data notification message, and so on, for example, for N3 connection. An interface N6 is a reference point between an UPF entity and the DN, and configured to transmit the user-plane data, and so on.

UE is in an Access Stratum (AS) connection with the network device, and interacts an AS message and wireless data with the network device. The UE is in a NAS connection with the AMF network element, and interacts a NAS message. The AMF network element is responsible for mobility management of the UE. The SMF network element is responsible for session management of the UE. In addition to mobility management of the mobile terminal, the AMF network element is also responsible for transmitting a message related to session management between the UE and the SMF network element. The PCF network element is responsible for developing strategies related to mobility management, session management, charging, and so on, for the UE. The UPF network element is connected to the network device and an external data network for data transmission.

In addition, the Network Data Analytics Function (NWDAF) network element is further added into the core network in the 5G network. The NWDAF network element may collect data from network elements of the core network and network management systems to conduct big data statistics, analysis or intelligent data analysis, and obtain analysis or prediction data at the network side, so as to assist various network elements to control the access of the UE more effectively based on a result of the analysis data.

The NWDAF network element may collect data from other network elements for big data analysis. For this purpose, interfaces between the NWDAF network element and other network elements are defined, which includes, for example, an interface N_{nf} shown in FIG. 4A, for which each of other network elements requests a certain analysis result from the NWDAF network element, and an interface N_{nwdaf} shown in FIG. 4B, for which the NWDAF network element transmits the certain analysis result to each of the other network elements.

Through deep research by the inventor of the present disclosure, it is found that, in the process of the aforesaid federated learning, although data of multiple nodes may be collected and training and inference may be performed, on condition that data privacy is ensured, a node serving as the coordinator may directly obtain an inference result in an inference process because of decryption ability thereof. For example, if the active party is a third-party application server such as an OTT server, and the coordinator is a node within the core network, inference information of an artificial intelligence (AI) application initiated by the third-party application server may be known in the core network, and there exists still a privacy risk. In addition, the coordinator may constantly collect and decrypt model intermediate data of the participants A and B, and thus infers model information of the participants A and B in a certain degree, which also result in a risk of privacy data leakage. Furthermore, the federated learning is realized based on a current 5G system architecture. Since the NWDAF network element may just interact with other network elements and obtain required data, data aggregation function of the NWDAF network element is failed to be used to improve data privacy security of the federated learning.

The solution provided by some embodiments of the present disclosure is mainly used to solve at least one of the aforesaid problems.

In order to gain a more detailed understanding of the characteristics and technical content of some embodiments of the present disclosure, the implementation of some embodiments of the present disclosure is described in detail below in combination with accompanying figures. The accompanying figures are for reference only and are not intended to limit the embodiments of the present disclosure.

FIG. 5 is a schematic flow chart of a federated learning method according to some embodiments of the present disclosure. The method may include the following operations.

At S51, the method includes sending, by a first device, a first key to a second device. The first key is configured to encrypt inference information of a second model in the second device to obtain first encrypted inference information.

At S52, the method includes obtaining, by the first device, target information based on inference information of a first model in the first device and second encrypted inference information corresponding to the first encrypted inference information in response to the first device receiving the second encrypted inference information.

In some embodiments, the first device includes at least one of: a second terminal device, at least one network element of a second core network, and a second server.

In some embodiments, the second device includes at least one of: a third terminal device, at least one network element of a third core network, and a third server.

Herein, the at least one network element of the second core network and/or the third core network may include at least one of a variety of network elements as shown in FIG. 3. The second core network and the third core network may be the same core network, or may be different core networks.

In some embodiments, the aforesaid inference information may include output information for an inference request obtained by using a model. For example, the first device is the active party of federated learning, and the second device is the passive party of federated learning. The first device may initiate an inference task and transmit an inference request to the second device. The inference request may include input information of the inference task, model ID, etc. The model ID may be configured to indicate the second device to determine a second model from at least one model in the second device to execute the inference task. The second device may input the input information of the inference task into the second model, and output information of the second model is the inference information of the second model.

Correspondingly to the aforesaid method, the second device may receive the first key. The second device may encrypt the inference information of the second model in the second device by using the first key, to obtain the first encrypted inference information.

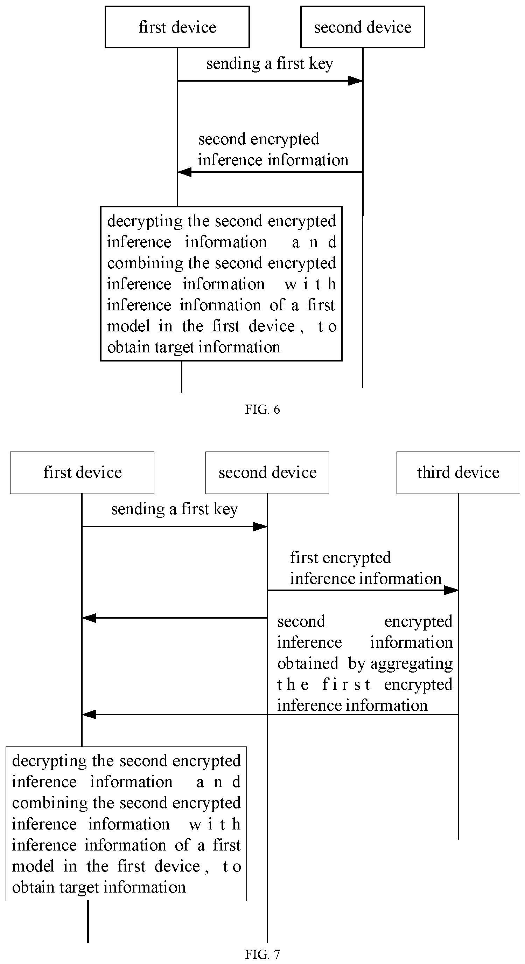

In some embodiments, the second encrypted inference information may be a communication message of the first encrypted inference information. For example, after the second device obtains the first encrypted inference information, the second device may pack the first encrypted inference information into the second encrypted inference information according to a preset communication message format, and transmit the second encrypted inference information to the first device as shown in FIG. 6.

In some embodiments, the second encrypted inference information may also be information obtained after performing other processing on the first encrypted inference information. For example, after obtaining the first encrypted inference information, the second device may transmit the first encrypted inference information to other devices, and the other devices may process the first encrypted inference information to obtain the second encrypted inference information and transmit the second encrypted inference information to the first device.

In some embodiments, the first key may be a public key corresponding to a first private key held by the first device. Since the first device holds the first private key, the first device is a key management party and has a decryption ability.

In some embodiments, the first device may decrypt the received second encrypted inference information by using the first private key, so as to obtain corresponding decryption information, and the decryption information may represent the inference information of the second model in the second device. The first device may obtain the target information based on the decrypted information and the inference information of the first model in the first device.

The inference information of the first model may be output information of the first model after the input information of the inference task is input into the first model. The target information is a final result of federated learning, i.e., an inference result for the inference request.

In the aforesaid federated learning method, the second device may encrypt the inference information of the second model therein to obtain the first encrypted inference information, and the first device may obtain the target information based on the second encrypted inference information corresponding to the first encrypted inference information and the inference information of the first model in the first device. Therefore, the first device and the second device may participate in the federated learning based on their own models and infer the target information. In the process of inferring and obtaining the target information, the first device may send the key and process the second encrypted inference information obtained by encrypting. Therefore, it is implemented that the participant of the inference process may manage the key, and thus, relevant data being decrypted by other nodes may be avoided, and the data privacy security may be improved.

As explained above, the second encrypted inference information may be information obtained after the first encrypted inference information be processed. In some embodiments, the second encrypted inference information may be information obtained after the first encrypted inference information of multiple devices are aggregated.

In some embodiments, the second device may include N electronic devices, and the aforementioned method may further include the following operations.

An i^{th} electronic device of the N electronic devices may receive the first key, encrypt the inference information of the second model in the i^{th} electronic device by using the first key, obtain the first encrypted inference information, and transmit the first encrypted inference to a third device.

The third device may determine the second encrypted inference information based on the received first encrypted inference information.

The third device may transmit the second encrypted inference information to the first device.

Herein, N is an integer greater than or equal to 2, and i is an integer greater than or equal to 1 and less than or equal to N.

That is, the first key is configured to indicate an i^{th} electronic device of the N electronic devices to encrypt the inference information of the second model in the i^{th} electronic device, obtain the first encrypted inference information, and transmit the first encrypted inference information to a third device. The first encrypted inference information is configured to indicate the third device to determine the second encrypted inference information.

From the perspective of the third device, the aforesaid method includes the following operations.

The method includes receiving, by a third device, first encrypted inference information from an i^{th} electronic device of N electronic devices, the first encrypted inference information is obtained by the i^{th} electronic device encrypting inference information of a second model in the i^{th} electronic device based on a first key sent from a first device, N is an integer greater than or equal to 2, and i is an integer greater than or equal to 1 and less than or equal to N.

The method includes determining, by the third device, second encrypted inference information corresponding to the first encrypted inference information based on the first encrypted inference information, and transmitting, by the third device, the second encrypted inference information to the first device, wherein the second encrypted inference information is configured to indicate the first device to obtain target information based on inference information of a first model in the first device and the second encrypted inference information.

In some exemplary application scenarios, each of the N electronic devices may have a corresponding second model, and parameters of the second model in the electronic devices may be different from each other. Each electronic device may obtain inference information based on its own second model and encrypt the inference information to obtain the first encrypted inference information. As shown in FIG. 7, the N electronic devices may transmit the first encrypted inference information to the third device. The third device may aggregate N first encrypted inference information to obtain the second encrypted inference information and transmit the second encrypted inference information to the first device. The first device may obtain the target information by decrypting the second encrypted inference information and combining inference information of the first model.

In some embodiments, the third device may determine the second encrypted inference information based on the received first encrypted inference information. Specifically, the third device may sum up the received first encrypted inference information to obtain the second encrypted inference information.

Even if the first device has the decryption ability and may decrypt the second encrypted inference information, the information obtained by the decrypting is also an aggregating result of inference information of multiple second models because the second encrypted inference information is obtained by aggregating multiple first encrypted inference information. Thus, the inference information of each second model cannot be obtained. It can be seen that, the data privacy security may be further improved based on the aforesaid method.

In some embodiments, the second device may include the third device. That is, the third device may also operate as a participant in the federated learning, receive the first key, encrypt the inference information of the second model in the third device, and obtain the corresponding first encrypted inference information. After receiving the first encrypted inference information transmitted from other devices, the third device may aggregate the first encrypted inference information thereof and the first encrypted inference information of other devices to obtain the second encrypted inference information.

In some embodiments, the third device may include a first NWDAF network element. In other words, the data privacy security of the federated learning may be improved by using the data aggregation function of the NWDAF network element of the core network.

The federated learning method provided by some embodiments of the present disclosure may also include a training process of the federated learning. For example, if the first device is the active party of the federated learning, the first device may hold labels of training data and may calculate a loss function. Therefore, the federated learning method may also include: determining a loss function based on label information in a federated learning training process of the first model and the second model.

In some embodiments of the present disclosure, a key management party in the federated learning inference process is different from that in the federated learning training process. According to the aforesaid description, the key management party may be the first device in the federated learning inference process. For example, the key management party may be other devices except the first device and the second device in the federated learning training process.

In some embodiments, the federated learning method may also include the following operations.

The method includes receiving, by the first device, a second key from a fourth device.

The method includes encrypting, by the first device, training information of the first model by using the second key to obtain first encrypted training information.

The method includes transmitting, by the first device, the first encrypted training information, the first encrypted training information is configured to enable the fourth device to obtain model updating information based on second encrypted training information corresponding to the first encrypted training information, and the model updating information is configured to update the first model.

From a system perspective, the federated learning method may include the following operations.

The fourth device may send a second key.

The first device may receive the second key, encrypt training information of the first model by using the second key, obtain first encrypted training information, and transmit the first encrypted training information.

The fourth device may obtain model updating information based on second encrypted training information corresponding to the first encrypted training information, and transmit the model updating information.

The first device may update the first model based on the model updating information.

In some embodiments, the aforesaid operations may be implemented before the operation S51 and S52 and may be iterated for many times until the first model and/or the second model meet a preset convergence condition.

In some embodiments, the second key may be a public key corresponding to a second private key held by the fourth device. Since the fourth device holds the second private key, the fourth device is the key management party and has the decryption ability.

In some embodiments, the second device may also receive the second key, encrypt training information of the second model by using the second key, obtain third encrypted training information, and transmit the third encrypted training information. The fourth device may combine the received first encrypted training information and third encrypted training information to obtain the second encrypted training information, which may be configured to determine model updating information. For example, the fourth device may aggregate, for example, sum up, the first encrypted training information and the third encrypted training information to obtain the second encrypted training information, and then decrypt the second encrypted training information to obtain the model updating information.

In some embodiments, the aforesaid training information may include various information calculated and obtained by each device based on a respective model in the federated learning training process, such as a loss function, a gradient, and the like. The aforesaid model updating information may include the gradient of the federated model obtained by aggregating the gradient of each device, and may include the gradient, mask, and other information of the model corresponding to each device.

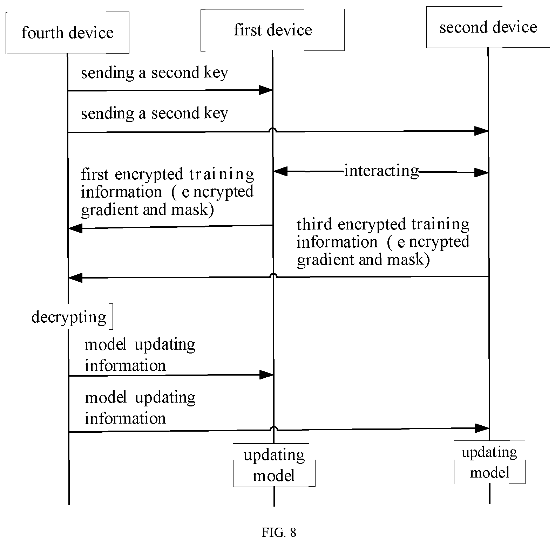

For example, as shown in FIG. 8, according to the aforesaid method, the fourth device may send the second key to the first device and the second device, respectively. Herein, the second model may include at least one electronic device. The first device may interact with the second device. The first device may provide label information of training data and calculate the loss function. The first device may calculate gradient of the first model, and the at least one electronic device included by the second device may calculate gradients of the at least one second model, which is used as the aforesaid training information. The first device may add a mask to the gradient, encrypt the gradient and the mask based on the second key, obtain the first encrypted training information, and transmit the first encrypted training information. Each of the at least one electronic device may add a mask to the gradient thereof, encrypt the gradient and the mask based on the second key, obtain the third encrypted training information thereof, and transmit the third encrypted training information. The fourth device may aggregate the first encrypted training information and the third encrypted training information to obtain the second encrypted training information, and decrypt the second encrypted training information by using the second private key to obtain the model updating information of the first model and second models. The model updating information of the first model and second models are transmitted to various participants, i.e., the first device and each electronic device included in the second device, respectively. Each participant may update its own model.

In some embodiments, the fourth device may include at least one of: a first terminal device, at least one network element of a first core network, and a first server.

In some embodiments, the second device may also include the fourth device. That is, the fourth device may also participate in the training and inference process of the federated learning.

In some embodiments, in the training process, the fourth device may receive the loss function calculated by the first device based on the label information, calculate the gradient of its own second model based on the loss function, take the gradient as the model updating information of its own second model, and update its own second model. In addition, the fourth device may receive and decrypt the encrypted training information of the first device and the encrypted training information of other electronic devices except the fourth device in the second device by using the private key, to obtain the corresponding model updating information to, and transmit the model updating information to a corresponding device.

In the inference process, the fourth device may receive the first key sent from the first device, encrypt the inference information of the second model in the fourth device by using the first key, and obtain the first encrypted inference information. In this way, the first device may infer to obtain the target information in combination with the information of the second model in the fourth device.

In some embodiments, in order to avoid the fourth device from decrypting the first encrypted training information of the first device and the third encrypted training information of the second device respectively, a fifth device that does not have the decryption ability may realize a process of aggregating the first encrypted training information and the third encrypted training information.

The transmitting, by the first device, the first encrypted training information may include the following operations.

The first device may transmit the first encrypted training information to a fifth device.

The first encrypted training information is configured to indicate the fifth device to obtain the second encrypted training information based on third encrypted training information from the second device and the first encrypted training information, and to transmit the second encrypted training information to the fourth device.

The third encrypted training information may be obtained by encrypting the training information of the second model by using the second key. The second encrypted training information is configured to indicate the fourth device to determine the model updating information.

From a system perspective, the aforesaid federated learning method further includes the following operations.

The second device may receive the second key, encrypt the training information of the second model by using the second key, obtain the third encrypted training information, and transmit the third encrypted training information.

The fifth device may receive the first encrypted training information and the third encrypted training information, obtain the second encrypted training information based on the first encrypted training information and the third encrypted training information, and transmit the second encrypted training information;
The fourth device may receive the second encrypted training information and determine the model updating information based on the second encrypted training information.

In some embodiments, the fifth device may include a second NWDAF network element.

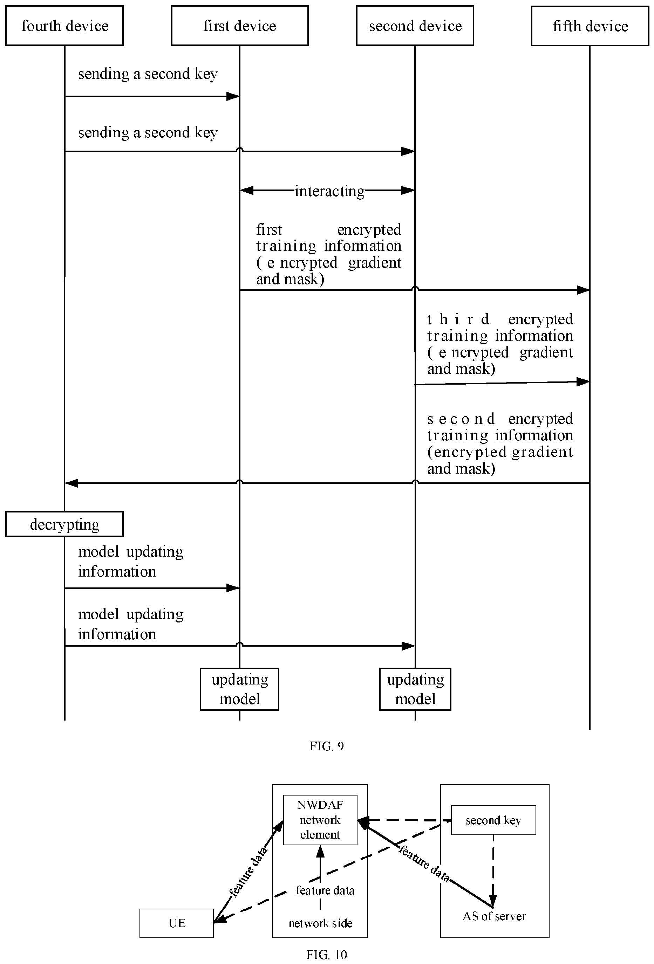

For example, as shown in FIG. 9, according to the aforesaid method, the fourth device may be configured to send the second key to the first device and the second device respectively. The first device may interact with the second device. The first device may provide label information of training data and calculates the loss function. The first device may calculate the gradient of the first model, and the second device may calculate the gradient of the second model, which is used as the aforesaid training information. The first device may add a mask to the gradient, encrypt the gradient and mask based on the second key, obtain the first encrypted training information, and transmit the first encrypted training information. The second device may add a mask to the gradient, encrypt the gradient and mask based on the second key, obtain the third encrypted training information, and transmit the third encrypted training information. The fifth device may receive the first encrypted training information and the third encrypted training information, aggregate the first encrypted training information and the third encrypted training information, and obtain the second encrypted training information, and transmit the second encrypted training information to the fourth device. The fourth device may decrypt the second encrypted training information by using the second private key to obtain the model updating information. The fourth device may transmit the model updating information to various participants, that is, the first device and the second device. Each participant may update its own model.

In some embodiments, the second device may also include a fifth device. That is, the fifth device may also participate in the training and inference process of the federated learning.

In some embodiments, in the training process, the fifth device may receive the second key sent from the fourth device, encrypt the training information thereof to obtain the encrypted training information, aggregate the received encrypted training information with the encrypted training information thereof to obtain the second encrypted training information, transmit the second encrypted training information to the fourth device to obtain the model updating information, and update the model.

In the inference process, the fifth device may receive the first key sent from the first device and encrypt the inference information of its own second model to obtain the first encrypted inference information. In some embodiments, the fifth device may be the same as the third device or may be different from the third device. If the fifth device is the same as the third device, the fifth device may combine the first encrypted inference information transmitted from other electronic devices of the second device, obtain the second encrypted inference information, and transmit the second encrypted inference information to the first device to determine the target information. If the fifth device is different from the third device, the fifth device may transmit the first encrypted inference information thereof to the third device, and the third device may aggregate the first encrypted inference information of each device, obtain the second encrypted inference information, and transmit the second encrypted inference information to the first device to determine the target information.

In some embodiments, the first key and/or the second key may be sent to a corresponding node in an establishing or modifying process of a packet data unit (PDU) session between the terminal device and the network device, or may be sent to the corresponding node in a registration request process. In some embodiments, the first key and/or the second key may be sent to the corresponding node in an authentication process or an authorization process occurred in the related process. The authentication process, for example, may be a secondary authentication process performed between the terminal device and the application server through the core network, and triggered by the SMF network element in the establishing process of the PDU session. A key may be sent from one node to other nodes. For example, the key may be sent from a network element of the core network to the terminal device and/or the server, or from the terminal device to the network element of the core network and/or the server.

In some embodiments, the receiving, by the first device, a second key from a fourth device may include the following operations.

The first device receives the second key from the fourth device in a first process.

The first process may include at least one of: an establishing process of a first Packet Data Unit (PDU) session, a modifying process of the first PDU session, a first registration request process, a first authentication process, and a first authorization process.

Accordingly, the fourth device sends the second key in the first process.

In some embodiments, the sending, by a first device, a first key to a second device may include the following operations.

The first device sends the first key to the second device in a second process.

The second process may include at least one of: an establishing process of a second Packet Data Unit (PDU) session, a modifying process of the second PDU session, a second registration request process, a second authentication process, and a second authorization process.

Accordingly, the second device receives the first key in the second process.

The above describes specific settings and implementations of some embodiments of the present disclosure from different perspectives. By utilizing at least one embodiment mentioned above, it is realized that the key may be managed by participants of the inference process. In this way, relevant data being decrypted by other nodes may be avoided, and the data privacy security may be improved.

In some embodiments, the participant managing the key may be the active party of the federated learning. In this way, only the active party may obtain the target information for the federated learning inference, and the possibility of the application result being known to other participants may be effectively reduced.

In some embodiments, aggregating nodes such as the third device and the fifth device may be set in the federated learning. The aggregating nodes do not have the decryption ability. By aggregating encrypted information of various participants and transmitting the aggregated encrypted information to the key management party, the possibility of the key management party decrypting to obtain the model information of each participant may be reduced, and the data privacy security may be further improved.

In some embodiments, the key management party in the training process may be different from that in the inference process of the federated learning. The key may be replaced, and the active party may send a new key in the inference process. Thus, this further improves the data privacy security.

Some application examples may be provided in the following to further explain the aforesaid technical effects of some embodiments of the present disclosure.

### Application Example 1

The first device may include at least one network element at the network side (the core network), and therefore, the network side may serve as the active party. As shown in FIG. 10, the Network Data Analysis Function (NWDAF) network element at the network side may operate as the aggregating node, i.e., the third device and the fifth device. The NWDAF network element may have labels of data samples and may be responsible for collecting data of various nodes. The second device may include a UE and a OTT server. That is, the UE and the OTT server may serve as the passive party. The OTT server may provide feature data required by the samples through the Access Stratum (AS). In the training process, the OTT server may also serve as the fourth device, i.e., the key management party, to generate the second key and send the second key to the UE and the network side.

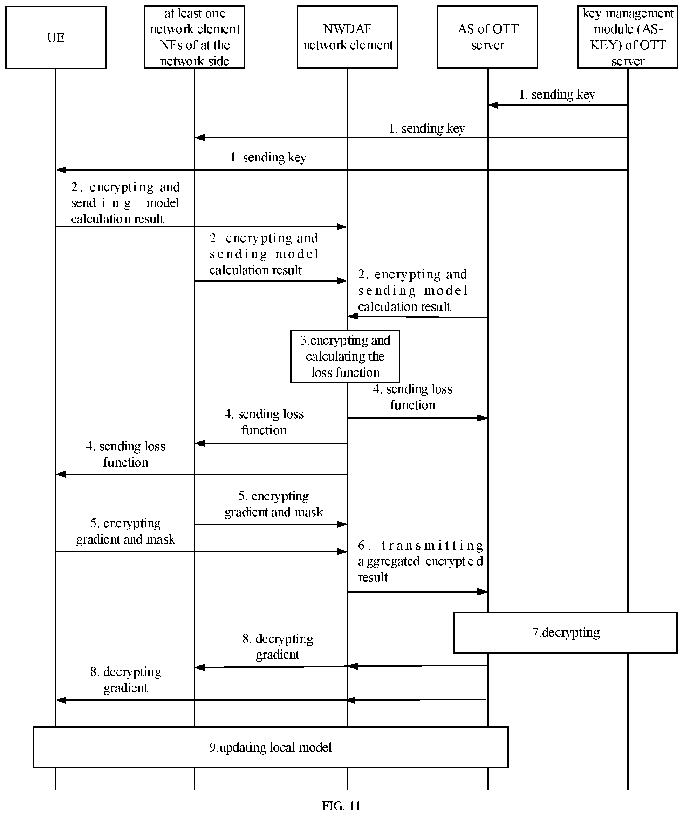

As shown in FIG. 11, the training process of the federated learning may include the following.
1. The OTT server may send the first key to the UE and the at least one network element NFs at the network side to encrypt data that needs to be transmitted. The first key may be generated and sent from a key management module AS-KEY of the OTT server.
2. The UE, the AS, and the at least one network element NFs at the network side may obtain a model calculation result based on local data, encrypt the model calculation result, and transmit the encrypted model calculation result to the NWDAF network element, respectively.
3. The NWDAF network element may aggregate data of various nodes, encrypt and calculate the loss function based on the labels.
4. The NWDAF network element may send the loss function to the UE, the AS, and the at least one network element NFs.
5. The UE, the AS, and the at least one network element NFs may calculate the encrypted gradient, add a mask to the encrypted gradient, and send the masked gradient to the NWDAF network element, respectively.
6. The NWADF network element may aggregate the masked gradient sent from various nodes and transparently transmit the aggregated encryption results to the AS.
7. The AS may decrypt the loss function and the gradient based on the private key.
8. The AS may send the gradient of a respective node back to the node.
9. Various nodes may remove the mask based on the decrypted gradient and update a weight of a local model, respectively.

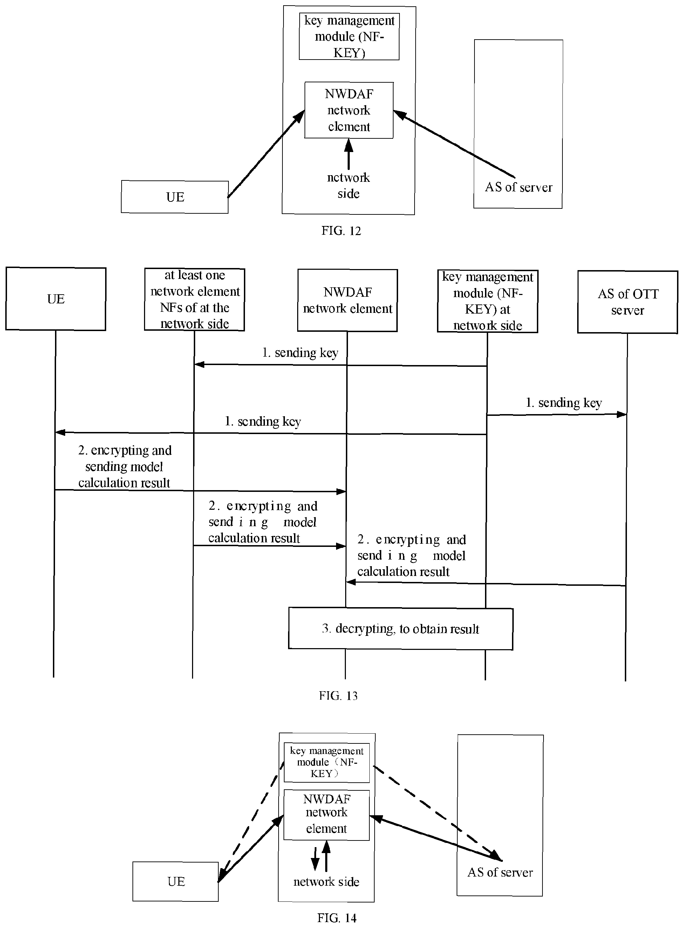

In the inference process, since the network side serves as the active party, the result of certain requirement analysis initiated by the network side for the 5G communication system is not expected to be known to a third-party server. Therefore, the key management party is replaced with the at least one network element at the network side. That is, the network side may generate a new key and send the new key to various nodes in the inference process. The key management module NF-KEY in the at least one network element is responsible for generating and sending the key, as well as a decryption operation, and other modules in the at least one network element are responsible for participating in calculations. As shown in FIG. 12, the NWDAF network element, as the aggregating node (i.e. The third device), is responsible for collecting inference information of various nodes.

As shown in FIG. 13, the inference process of the federated learning may include the following.
1. The network side may serve as the active party, and the key management module NF-KEY thereof may send the first key and model configuration information required to be analyzed to various nodes, respectively. The model configuration information may include the model ID and the input information.
2. The UE, the at least one network element NFs at the network side, and the AS may calculate based on local data and the corresponding model, obtain a calculation result of the inference process, and transmit the calculation result to the NWDAF network element for aggregation, respectively.
3. The key management module NF-KEY at the network side may decrypt the aggregation result of the NWDAF network element and obtain a final analysis result.

With the key management method, a combined analysis of multi-domain data of the UE, the network side, and the third-party application may be realized, on condition that the data privacy of various nodes is protected. In this way, the network side may obtain a comprehensive analysis result.

### Application Example 2

The OTT server may serve as the active party (the first device). The AS of the OTT server may have labels of data samples. The at least one network element at the network side (the core network) and the UE may serve as the passive party (the second device) and provide feature data related to the OTT applications. As shown in FIG. 14, the NWDAF network element at the network side may operate as the aggregating node (the third device and the fifth device) and may be responsible for collecting data of various nodes. In the training process, the key management party is the network side, i.e., the key management module NF-KEY (the fourth device) at the network side may generate the second key, and send the second key to the UE and the AS.

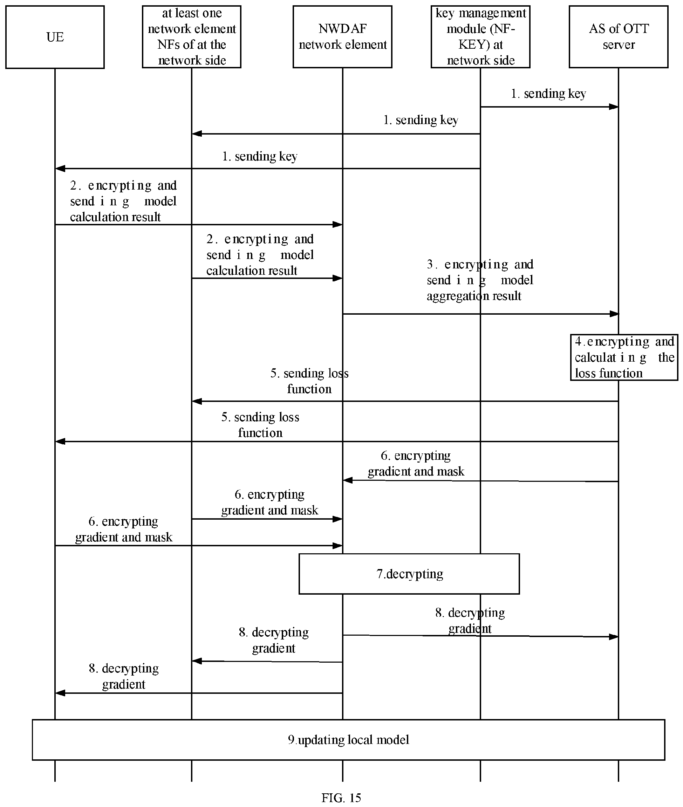

As shown in FIG. 15, the training process of the federated learning may include the following.
1. The key management module NF-KEY at the network side may send the second key to the UE, the at least one network element NFs at the network side, and the AS. The second key is configured to encrypt data to be transmitted.
2. The UE and the at least one network element NFs at the network side may determine a model calculation result based on local data, encrypt the model calculation result, and transmit the encrypted model calculation result to the NWDAF network element, respectively.
3. The NWDAF network element may aggregate the encrypted model calculation result of various nodes, obtain a model aggregation result, and transmit the model calculation result to the AS.
4. The AS may encrypt and calculate the loss function based on the received model aggregation result, a model calculation result thereof, and the labels.
5. The AS may send the loss function to the UE and the NFs.
6. Various nodes may calculate the encrypted gradient, add a mask to the encrypted gradient, and send the masked gradient to the NWDAF network element, respectively. The NWDAF network element may aggregate the gradient and the mask and send the gradient and the mask to the key management module NF-KEY
7. The key management module NF-KEY may decrypt the loss function and the gradient based on the private key.
8. The key management module NF-KEY may send the gradient belonging to a respective node back to a node.
9. Various nodes may remove the mask based on the decrypted gradient and update a weight of a local model, respectively.

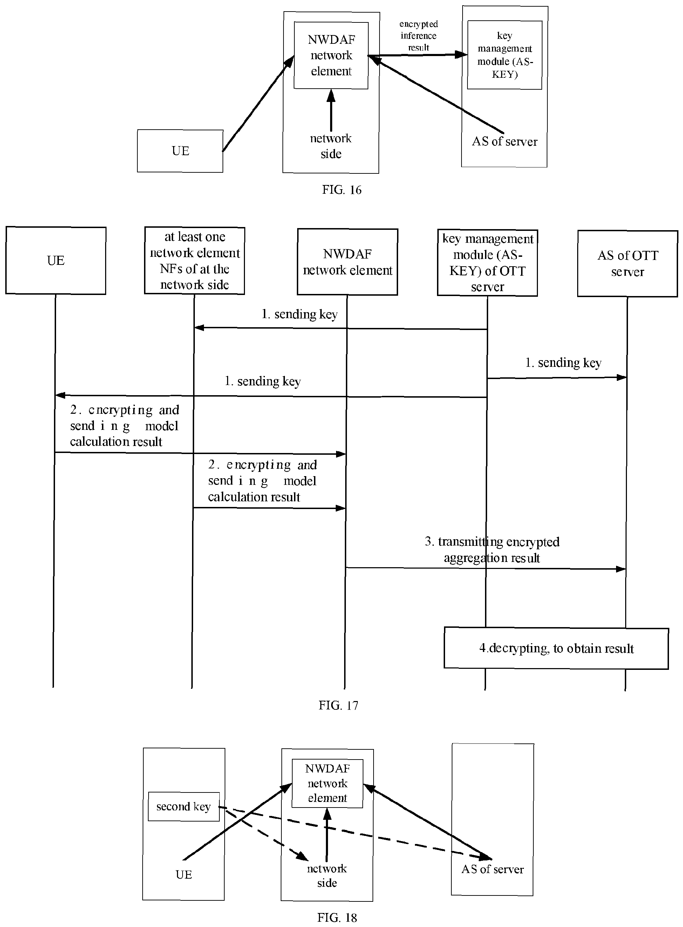

Similar to the application example 1, a new key management party is required to be replaced in the inference process. That is, the key management module AS-KEY of the active party AS may generate the first key and send the first key to various nodes in the inference process. As shown in FIG. 16, the NWDAF network element may aggregate the encrypted inference result of various nodes and transmit the encrypted inference result to the AS-KEY

As shown in FIG. 17, the inference process may include the following.
1. The AS may serve as the active party and send the first key and model configuration information required to be analyzed to various nodes, respectively.
2. The UE and the at least one network element NFs at the network side may calculate based on local data and corresponding model to obtain a model calculation result, and transmit the model calculation result to the NWDAF network element for aggregation, respectively.
3. The NWDAF network element may transmit an encrypted aggregation result to the AS.
4. The AS may decrypt the encrypted aggregation result based on the private key and combining the calculation result thereof to obtain a final analysis result.

### Application Example 3

The network side may serve as the active party (the first device). The NWDAF network element may have labels of data samples. The Access Stratum (AS) of the OTT server and the UE may serve as the passive party (the second device). As shown in FIG. 18, the NWDAF network element may operate as the aggregating node (the third device and the fifth device), and may be responsible for collecting the data of various nodes. In the training process, the key management party (the fourth device) is the UE, that is, the UE may generate the second key and send the second key to the network side and the AS.

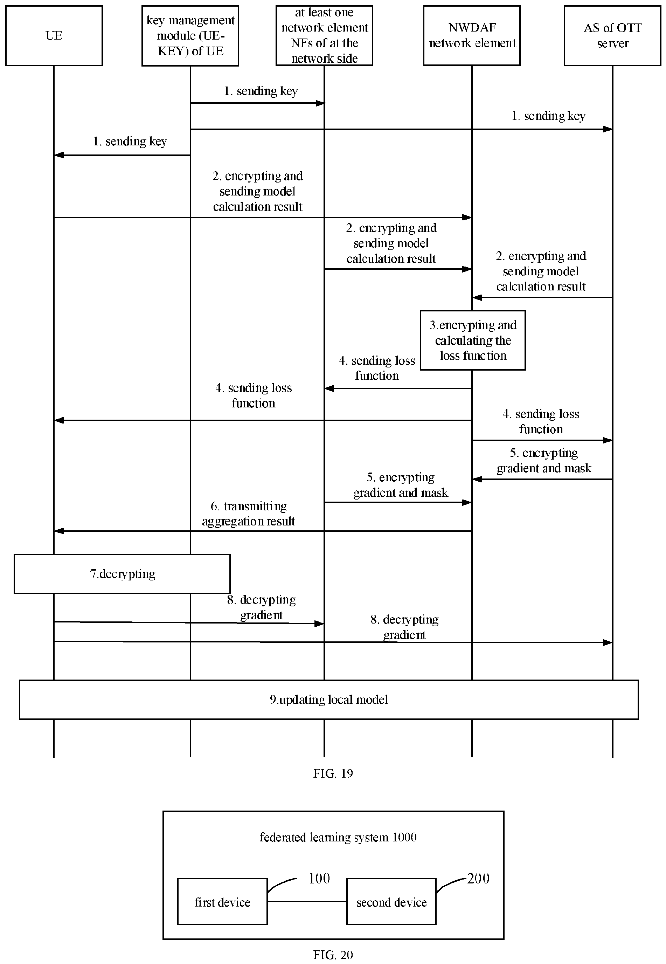

As shown in FIG. 19, the training process of the federated learning may include the following.
1. The key management module UE-KEY of the terminal device may send the second key to the at least one network element NFs at the network side and the AS to encrypt data to be transmitted.
2. The UE, the at least one network element NFs at the network side, and the AS may obtain a model calculation result based on local data, encrypt the model calculation result, and transmit the encrypted model calculation result to the NWDAF network element, respectively.
3. The NWDAF network element may aggregate data of various nodes, encrypt and calculate the loss function based on the labels.
4. The NWDAF network element may send the loss function to the UE, the NFs, and the AS.
5. The UE, the NFs, and the AS may calculate the encrypted gradient, each of the NFs and the AS may add a mask on the gradient and send the masked gradient to the NWDAF network element, respectively.
6. The NWDAF network element may aggregate the received gradient and mask, obtain an aggregation result, and transmit the aggregation result to the UE.
7. The UE may decrypt the loss function and the gradient based on the private key.
8. The UE may send the gradient back to various nodes.
9. Various nodes may remove the mask based on the decrypted gradient and update a weight of a local model, respectively.

In the inference process, similarly to the application example 1, a new key management party is required to be replaced. In some application examples, the inference process may include the following operations. The network side, as the active party, may generate the first key and send the first key to various nodes. The following operations are similar to the application example 1, which will not be described herein.

It should be noted that each device in some embodiments of the present disclosure may include at least one of the terminal device, the network element of the core network, the server in a network system. In the practical application, how to set the first device (the active party), the second device (the participant), the fourth device (the key management party in the training process), and the third device and the fifth device (the aggregating node) may be determined based on actual needs. The specific device setting mode may be not limited to the aforesaid application examples, and the implementation process may be similar to the aforesaid application examples.

Corresponding to the processing method of at least one of the aforesaid embodiments, some embodiments of the present disclosure also provide a federated learning system 1000, as shown inFIG. 20, which includes: a first device 100, configured to send a first key; a second device 200, configured to receive the first key, encrypt inference information of a second model in the second device 200 by using the first key, and obtain first encrypted inference information; the first device 100 is further configured to obtain target information based on inference information of a first model in the first device 100 and second encrypted inference information corresponding to the first encrypted inference information in response to receiving the second encrypted inference information.

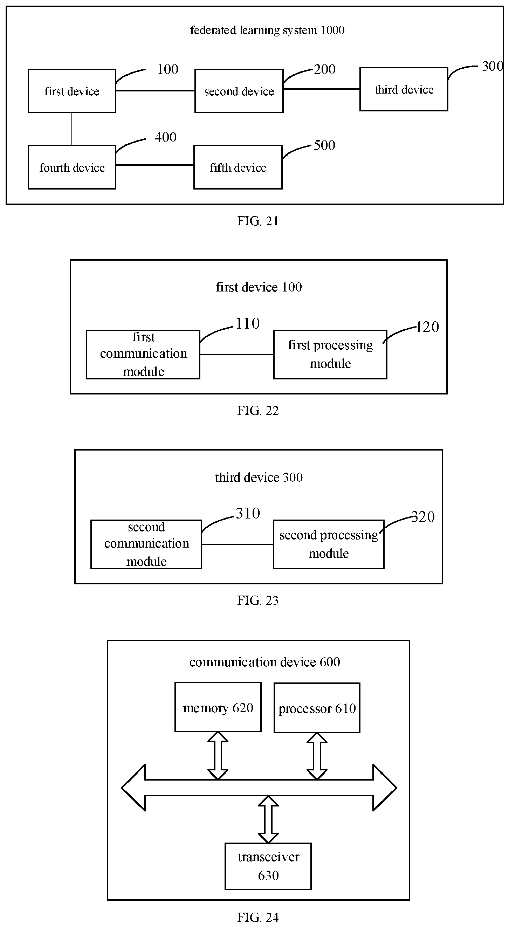

In some embodiments, the second device 200 may include N electronic devices, an i^{th} electronic device of the N electronic devices is configured to encrypt the inference information of the second model in the i^{th} electronic device by using the first key, obtain the first encrypted inference information, and transmit the first encrypted inference information. As shown in FIG. 21, the system 1000 may further include a third device 300 configured to receive the first encrypted inference information and determine the second encrypted inference information based on the first encrypted inference information. Herein, N is an integer greater than or equal to 2, and i is an integer greater than or equal to 1 and less than or equal to N.

In some embodiments, as shown in FIG. 21, the system 1000 may further include a fourth device 400 configured to send a second key. The first device 100 is further configured to receive the second key, encrypt training information of the first model by using the second key, obtain the first encrypted training information, and transmit the first encrypted training information. The fourth device 400 is further configured to obtain model updating information based on the second encrypted training information corresponding to the first encrypted training information, and the model updating information is configured to update the first model.

In some embodiments, as shown in FIG. 21, the second device 200 is further configured to receive the second key, encrypt training information of the second model by using the second key, obtain third encrypted training information, and transmit the third encrypted training information. The system 1000 further comprises a fifth device 500 configured to receive the first encrypted training information and the third encrypted training information, obtain the second encrypted training information based on the first encrypted training information and the second encrypted training information, and transmit the second encrypted training information. The fourth device 400 is further configured to receive the second encrypted training information and determine the model updating information based on the second encrypted training information.

Each device in the federated learning system 1000 of some embodiments of the present disclosure may realize the corresponding function of the corresponding device in the aforementioned method embodiments. The corresponding processes, functions, implementation methods, and beneficial effects of each device in the federated learning system 1000 may refer to the corresponding description in the aforesaid method embodiments, which will not be repeated herein.

Corresponding to the processing method of at least one of the aforesaid embodiments, some embodiments of the present disclosure also provide a first device 100, as shown in FIG. 22, which includes: a first communication module 110, configured to send a first key to a second device, wherein the first key is configured to encrypt inference information of a second model in the second device to obtain first encrypted inference information; and a first processing module 120, configured to obtain target information based on inference information of a first model in the first device and second encrypted inference information corresponding to the first encrypted inference information in response to the first device receiving the second encrypted inference information.

In some embodiments, the second device includes N electronic devices. The first key is configured to indicate an i^{th} electronic device of the N electronic devices to encrypt the inference information of the second model in the i^{th} electronic device, obtain the first encrypted inference information, and transmit the first encrypted inference information to a third device. The first encrypted inference information is configured to indicate the third device to determine the second encrypted inference information. N is an integer greater than or equal to 2, and i is an integer greater than or equal to 1 and less than or equal to N.

In some embodiments, the third device may include a first NWDAF network element.

In some embodiments, the first communication module 110 is further configured to receive a second key from a fourth device. The first processing module 120 is further configured to encrypt training information of the first model by using the second key and obtain the first encrypted training information. The first communication module 110 is further configured to transmit the first encrypted training information. Herein, the first encrypted training information is configured to enable the fourth device to obtain model updating information based on second encrypted training information corresponding to the first encrypted training information, and the model updating information is configured to update the first model.

In some embodiments, the first communication module 110 is further configured to transmit the first encrypted training information to a fifth device. The first encrypted training information is configured to indicate the fifth device to obtain the second encrypted training information based on third encrypted training information from the second device and the first encrypted training information, and transmit the second encrypted training information to the fourth device. The second encrypted training information is configured to indicate the fourth device to determine the model updating information.

In some embodiments, the fifth device may include a second NWDAF network element.

In some embodiments, the fourth device includes at least one of the following: at least one of: a first terminal device, at least one network element of a first core network, and a first server.

In some embodiments, the first communication module 110 is configured to receive the second key from the fourth device in a first process. Herein, the first process comprises at least one of: an establishing process of a first Packet Data Unit (PDU) session, a modifying process of the first PDU session, a first registration request process, a first authentication process, and a first authorization process.

In some embodiments, the first communication module 110 is configured to send the first key to the second device in a second process. Herein, the second process comprises at least one of: an establishing process of a second PDU session, a modifying process of the second PDU session, a second registration request process, a second authentication process, and a second authorization process.

In some embodiments, the first processing module 120 is further configured to determine a loss function based on label information in a federated learning training process of the first model and the second model.

In some embodiments, the first device includes at least one of: a second terminal device, at least one network element of a second core network, and a second server.

In some embodiments, the second device includes at least one of: a third terminal device, at least one network element of a third core network, and a third server.

The first device 100 in some embodiments of the present disclosure may realize the corresponding functions of the first device in the aforementioned method embodiments. the corresponding processes, functions, implementation methods, and beneficial effects of each module (sub module, unit, or component, etc.) of the first device 100 may refer to the corresponding description in the aforesaid method embodiments, which will not be repeated herein. It should be noted that the functions described by each module (submodule, unit, or component, etc.) of the first device 100 of some embodiments of the present disclosure may be realized by different modules (submodule, unit, or component, etc.), or may be realized by the same module (submodule, unit, or component, etc.). For example, the first transmission module and the second transmission module may be different modules, or may be the same module, both of which may realize corresponding functions thereof in some embodiments of the present disclosure. In addition, the communication module in some embodiments of the present disclosure may be realized by a transceiver of the device, and part of or all of the remaining modules may be realized by a processor of the device.

FIG. 23 is a schematic block diagram of a third device 300 according to some embodiments of the present disclosure. The third device 300 may include: a second communication module 310, configured to receive first encrypted inference information from an i^{th} electronic device of N electronic devices; a second processing module 320, configured to determining, by the third device, second encrypted inference information corresponding to the first encrypted inference information based on the first encrypted inference information. Herein, the first encrypted inference information is obtained by the i^{th} electronic device encrypting inference information of a second model in the i^{th} electronic device based on a first key sent from a first device. N is an integer greater than or equal to 2, and i is an integer greater than or equal to 1 and less than or equal to N. the second communication module 310 is further configured to transmit the second encrypted inference information to the first device. the second encrypted inference information is configured to indicate the first device to obtain target information based on inference information of a first model in the first device and the second encrypted inference information.

The third device 100 in some embodiments of the present disclosure may realize the corresponding functions of the first device in the aforementioned method embodiments. the corresponding processes, functions, implementation methods, and beneficial effects of each module (sub module, unit, or component, etc.) of the first device 100 may refer to the corresponding description in the aforesaid method embodiments, which will not be repeated herein. It should be noted that the functions described by each module (submodule, unit, or component, etc.) of the third device 300 of some embodiments of the present disclosure may be realized by different modules (submodule, unit, or component, etc.), or may be realized by the same module (submodule, unit, or component, etc.). For example, the first transmission module and the second transmission module may be different modules, or may be the same module, both of which may realize corresponding functions thereof in some embodiments of the present disclosure. In addition, the communication module in some embodiments of the present disclosure may be realized by a transceiver of the device, and part of or all of the remaining modules may be realized by a processor of the device.

FIG. 24 is a schematic structure diagram of a communication device 600 according to some embodiments of the present disclosure. the communication device 600 includes a processor 610, the processor 610 may call and run a computer program from a memory to execute the method of some embodiments of the present disclosure.

In some embodiments, the communication device 600 may further include a memory 620. the processor 610 may call and run the computer program from the memory 620 to execute the method of some embodiments of the present disclosure.

The memory 620 may be a separate component independent of the processor 610, or may be integrated in the processor 610.

In some embodiments, the communication device 600 may further include a transceiver 630, and the processor 610 may control the transceiver 630 to communicate with other device. in some embodiments, the transceiver 630 may transmit information or data to other devices, or receive information or data transmitted from other devices.

The transceiver 630 may include a transmitter and a receiver. The transceiver 630 may further include antennas, and the number of the antennas may be one or more.

In some embodiments, the communication device 600 may be the first device of some embodiments of the present disclosure, and the communication device 600 may realize corresponding processes realized by the first device in various methods according to some embodiments of the present disclosure, which will not be repeated herein for simplicity.

In some embodiments, the communication device 600 may be the third device of some embodiments of the present disclosure, and the communication device 600 may realize the corresponding processes realized by the third device in various methods according to some embodiments of the present disclosure, which will not be repeated herein for simplicity.

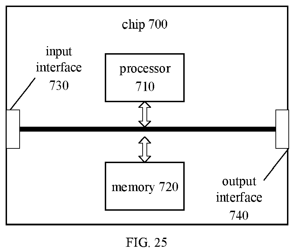

FIG. 25 is a schematic structure diagram of a chip 700 according to some embodiments of the present disclosure. The chip 700 includes a processor 710, a processor 710 may call and run a computer program from a memory to execute the method of some embodiments of the present disclosure.

In some embodiments, the chip 700 may further include a memory 720. the processor 710 may call and run the computer program from the memory 720 to execute the method of some embodiments of the present disclosure.

The memory 720 may be a separate component independent of the processor 710, or may be integrated in the processor 710.

In some embodiments, the chip 700 may further include an input interface 730. the processor 710 may control the input interface 730 to communicate with other devices or chips. In some embodiments, the processor 710 may control the input interface 730 to obtain information or data transmitted from other devices or chips.

In some embodiments, the chip 700 may further include an output interface 740. the processor 710 may control the output interface 740 to communicate with other devices or chips. In some embodiments, the processor 710 may control the output interface 740 to output information or data to other devices or chips.

In some embodiments, the chip may be applied to the first device of some embodiments of the present disclosure, and the chip may realize the corresponding processes realized by the first device in various methods according to some embodiments of the present disclosure, which will not be repeated herein for simplicity.

In some embodiments, the chip may be applied to the third device of some embodiments of the present disclosure, and the chip may realize the corresponding processes realized by the third device in various methods according to some embodiments of the present disclosure, which will not be repeated herein for simplicity.

It should be understood that the chip mentioned in some embodiments of the present disclosure may also be referred to as a system level chip, a system chip, a chip system, a system-on-chip chip, and so on.

The aforementioned processor may be a general-purpose processor, a digital signal processor (DSP), a field programmable gate array (FPGA), an application specific integrated circuit (ASIC), or other programmable logic devices, transistor logic devices, discrete hardware components, etc. Herein, the aforementioned general-purpose processor may be a microprocessor, any conventional processor, and so on.

The aforementioned memory may be a volatile memory or a non-volatile memory, or may include both the volatile and the non-volatile memory. Herein, the non-volatile memory may be a Read-Only Memory (ROM), a programmable ROM (PROM), an erasable PROM (EPROM), an electronically EPROM (EEPROM), or a flash memory. The volatile memory may be a Random Access Memory (RAM).

It should be understood that the foregoing memory is an exemplary but not a limiting explanation. For example, the memory in some embodiments of the present disclosure may also be a Static Random Access Memory (static RAM, SRAM), a Dynamic Random Access Memory (dynamic RAM, DRAM), a Synchronous Dynamic Random Access Memory (synchronous DRAM, SDRAM), a Double Data Rate Synchronous Dynamic Random Access Memory (double data rate SDRAM, DDR SDRAM), an Enhanced Synchronous Dynamic Random Access Memory (enhanced SDRAM, ESDRAM), a Synchronous Link Dynamic Random Access Memory (synch link DRAM, SLDRAM), or a Direct Rambus Random Access Memory (Direct Rambus RAM, DR RAM), etc. That is to say, the memory of some embodiments of the present disclosure are intended to include but are not limited to these and any other suitable types of memories.

All of or part of the foregoing embodiments may be implemented by using software, hardware, firmware, or any combination thereof. When implemented by the software, all of or part of the foregoing embodiments may be implemented in a form of a computer program product. The computer program product includes one or more computer instructions. When the computer instructions are loaded and executed on a computer, the processes or functions according to some embodiments of the present disclosure are all or partially generated. The computer may be a general-purpose computer, a special-purpose computer, a computer network, or another programmable apparatus. The computer instructions may be stored in a computer-readable storage medium, or may be sent from a computer-readable storage medium to another computer-readable storage medium. For example, the computer instructions may be sent from a website station, a computer, a server, or data center to another website station, another computer, another server, or another data center in a wired (for example, a coaxial cable, an optical fiber, or a digital subscriber line (DSL)) or wireless (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a high-density digital video disc (DVD)), a semiconductor medium (for example, a solid state disk (SSD)), or the like.

It should be understood that in various embodiments of the present disclosure, the size of the serial numbers of the aforesaid processes does not imply the order of execution. The execution order of each process should be determined by the function and internal logic of the corresponding process and should not constitute any limitation on the implementation process of some embodiments of the present disclosure.

It may be clearly understood by a person skilled in the art that, for the purpose of convenient and brief description, a detailed working process of the foregoing system, apparatus, and unit, may refer to a corresponding process in the foregoing method embodiments, and details are not described herein again.

The above description is only the specific implementation mode of the present disclosure, and the protection scope of the present disclosure is not limited herein. Any skilled person familiar with the technical field may easily think of changes or replacements within the technical scope disclosed in the present disclosure, which should be covered in the protection scope of the present disclosure. Therefore, the protection scope of the present disclosure shall be subject to the protection scope of the claims.

## Claims

1. A federated learning method, comprising:
sending, by a first device, a first key to a second device, wherein the first key is configured to encrypt inference information of a second model in the second device to obtain first encrypted inference information; and
obtaining, by the first device, target information based on inference information of a first model in the first device and second encrypted inference information corresponding to the first encrypted inference information, in response to receiving the second encrypted inference information.

2. The method as claimed in claim 1, wherein the second device comprises N electronic devices;
the first key is configured to indicate an i^{th} electronic device of the N electronic devices to encrypt the inference information of the second model in the i^{th} electronic device, obtain the first encrypted inference information, and transmit the first encrypted inference information to a third device;
the first encrypted inference information is configured to indicate the third device to determine the second encrypted inference information; and
wherein N is an integer greater than or equal to 2, and i is an integer greater than or equal to 1 and less than or equal to N.

3. The method as claimed in claim 2, wherein the third device comprises a first Network Data Analysis Function (NWDAF) network element.

4. The method as claimed in any one of claims 1-3, further comprising:
receiving, by the first device, a second key from a fourth device;
encrypting, by the first device, training information of the first model by using the second key to obtain first encrypted training information; and
transmitting, by the first device, the first encrypted training information, wherein the first encrypted training information is configured to enable the fourth device to obtain model updating information based on the second encrypted training information corresponding to the first encrypted training information, and the model updating information is configured to update the first model.

5. The method as claimed in claim 4, wherein the transmitting, by the first device, the first encrypted training information, comprises:
transmitting, by the first device, the first encrypted training information to a fifth device;
wherein the first encrypted training information is configured to indicate the fifth device to obtain the second encrypted training information based on third encrypted training information from the second device and the first encrypted training information, and to transmit the second encrypted training information to the fourth device; and
wherein the second encrypted training information is configured to indicate the fourth device to determine the model updating information.

6. The method as claimed in claim 5, wherein the fifth device comprises a second NWDAF network element.

7. The method as claimed in any one of claims 4-6, wherein the fourth device comprises at least one of: a first terminal device, at least one network element of a first core network, and a first server.

8. The method as claimed in any one of claims 4-7, wherein the receiving, by the first device, a second key from a fourth device, comprises:
receiving, by the first device, the second key from the fourth device in a first process;
wherein the first process comprises at least one of: an establishing process of a first Packet Data Unit (PDU) session, a modifying process of the first PDU session, a first registration request process, a first authentication process, and a first authorization process.

9. The method as claimed in any one of claims 1-8, wherein the sending, by a first device, a first key to a second device, comprises:
sending, by the first device, the first key to the second device in a second process;
wherein the second process comprises at least one of: an establishing process of a second PDU session, a modifying process of the second PDU session, a second registration request process, a second authentication process, and a second authorization process.

10. The method as claimed in any one of claims 1-9, further comprising:
determining, by the first device, a loss function based on label information in a federated learning training process of the first model and the second model.

11. The method as claimed in any one of claims 1-10, wherein the first device comprises at least one of: a second terminal device, at least one network element of a second core network, and a second server.

12. The method as claimed in any one of claims 1-11, wherein the second device comprises at least one of: a third terminal device, at least one network element of a third core network, and a third server.

13. A federated learning method, comprising:
receiving, by a third device, first encrypted inference information from an i^{th} electronic device of N electronic devices, wherein the first encrypted inference information is obtained by the i^{th} electronic device encrypting inference information of a second model in the i^{th} electronic device based on a first key sent from a first device; N is an integer greater than or equal to 2, and i is an integer greater than or equal to 1 and less than or equal to N;
determining, by the third device, second encrypted inference information corresponding to the first encrypted inference information based on the first encrypted inference information, and transmitting, by the third device, the second encrypted inference information to the first device, wherein the second encrypted inference information is configured to indicate the first device to obtain target information based on inference information of a first model in the first device and the second encrypted inference information.

14. The method as claimed in claim 13, wherein the third device comprises a first Network Data Analysis Function (NWDAF) network element.

15. A federated learning system, comprising:
a first device, configured to send a first key; and
a second device, configured to receive the first key, encrypt inference information of a second model in the second device by using the first key, and obtain first encrypted inference information;
wherein the first device is further configured to obtain target information based on inference information of a first model in the first device and second encrypted inference information corresponding to the first encrypted inference information in response to receiving the second encrypted inference information.

16. The system as claimed in claim 15, wherein the second device comprises N electronic devices, an i^{th} electronic device of the N electronic devices is configured to encrypt the inference information of the second model in the i^{th} electronic device by using the first key, obtain the first encrypted inference information, and transmit the first encrypted inference information;
the system further comprises:
a third device, configured to receive the first encrypted inference information, and determine the second encrypted inference information based on the first encrypted inference information; and
wherein N is an integer greater than or equal to 2, and i is an integer greater than or equal to 1 and less than or equal to N.

17. The system as claimed in claim 15 or 16, further comprising:
a fourth device, configured to send a second key;
wherein the first device is further configured to receive the second key, encrypt training information of the first model by using the second key, obtain the first encrypted training information, and transmit the first encrypted training information; and
the fourth device is further configured to obtain model updating information based on the second encrypted training information corresponding to the first encrypted training information, and the model updating information is configured to update the first model.

18. The system as claimed in claim 17, wherein the second device is further configured to receive the second key, encrypt training information of the second model by using the second key, obtain third encrypted training information, and transmit the third encrypted training information;
the system further comprises:
a fifth device, configured to receive the first encrypted training information and the third encrypted training information, obtain the second encrypted training information based on the first encrypted training information and the second encrypted training information, and transmit the second encrypted training information; and
the fourth device is further configured to receive the second encrypted training information and determine the model updating information based on the second encrypted training information.

19. A first device, comprising:
a first communication module, configured to send a first key to a second device, wherein the first key is configured to encrypt inference information of a second model in the second device to obtain first encrypted inference information; and
a first processing module, configured to obtain target information based on inference information of a first model in the first device and second encrypted inference information corresponding to the first encrypted inference information in response to the first device receiving the second encrypted inference information.

20. The first device as claimed in claim 19, wherein the second device comprises N electronic devices;
the first key is configured to indicate an i^{th} electronic device of the N electronic devices to encrypt the inference information of the second model in the i^{th} electronic device, obtain the first encrypted inference information, and transmit the first encrypted inference information to a third device;
the first encrypted inference information is configured to indicate the third device to determine the second encrypted inference information; and
wherein N is an integer greater than or equal to 2, and i is an integer greater than or equal to 1 and less than or equal to N.

21. The first device as claimed in claim 20, wherein the third device comprises a first Network Data Analysis Function (NWDAF) network element.

22. The first device as claimed in any one of claims 19-21, wherein the first communication module is further configured to receive a second key from a fourth device;
the first processing module is further configured to encrypt training information of the first model by using the second key and obtain the first encrypted training information; and
the first communication module is further configured to transmit the first encrypted training information, wherein the first encrypted training information is configured to enable the fourth device to obtain model updating information based on second encrypted training information corresponding to the first encrypted training information, and the model updating information is configured to update the first model.

23. The first device as claimed in claim 22, wherein the first communication module is further configured to transmit the first encrypted training information to a fifth device;
wherein the first encrypted training information is configured to indicate the fifth device to obtain the second encrypted training information based on third encrypted training information from the second device and the first encrypted training information, and to transmit the second encrypted training information to the fourth device; and
wherein the second encrypted training information is configured to indicate the fourth device to determine the model updating information.

24. The first device as claimed in claim 23, wherein the fifth device comprises a second NWDAF network element.

25. The first device as claimed in any one of claims 22-24, wherein the fourth device comprises at least one of: a first terminal device, at least one network element of a first core network, and a first server.

26. The first device as claimed in any one of claims 22-25, wherein the first communication module is configured to receive the second key from the fourth device in a first process; and
wherein the first process comprises at least one of: an establishing process of a first Packet Data Unit (PDU) session, a modifying process of the first PDU session, a first registration request process, a first authentication process, and a first authorization process.

27. The first device as claimed in any one of claims 19-26, wherein the first communication module is configured to send the first key to the second device in a second process; and
wherein the second process comprises at least one of: an establishing process of a second PDU session, a modifying process of the second PDU session, a second registration request process, a second authentication process, and a second authorization process.

28. The first device as claimed in any one of claims 19-27, wherein the first processing module is further configured to determine a loss function based on label information in a federated learning training process of the first model and the second model.

29. The first device as claimed in any one of claims 19-28, wherein the first device comprises at least one of: a second terminal device, at least one network element of a second core network, and a second server.

30. The first device as claimed in any one of claims 19-29, wherein the second device comprises at least one of: a third terminal device, at least one network element of a third core network, and a third server.

31. A third device, comprising:
a second communication module, configured to receive first encrypted inference information from an i^{th} electronic device of N electronic devices, wherein the first encrypted inference information is obtained by the i^{th} electronic device encrypting inference information of a second model in the i^{th} electronic device based on a first key sent from a first device; N is an integer greater than or equal to 2, and i is an integer greater than or equal to 1 and less than or equal to N;
a second processing module, configured to determining, by the third device, second encrypted inference information corresponding to the first encrypted inference information based on the first encrypted inference information; and
wherein the second communication module is further configured to transmit the second encrypted inference information to the first device, wherein the second encrypted inference information is configured to indicate the first device to obtain target information based on inference information of a first model in the first device and the second encrypted inference information.

32. The third device as claimed in claim 31, wherein the third device comprises a first Network Data Analysis Function (NWDAF) network element.

33. A first device, comprising a processor and a memory, wherein the memory is configured to store a computer program, the processor is configured to call and run the computer program stored in the memory, and execute operations of the method as claimed in any one of claims 1-12.

34. A third device, comprising a processor and a memory, wherein the memory is configured to store a computer program, the processor is configured to call and run the computer program stored in the memory, and execute operations of the method as claimed in claim 13 or 14.

35. A chip, comprising:
a processor, configured to call a computer program from a memory and run the computer program, to enable a device equipped with the chip to execute operations of the method as claimed in any one of claims 1-14.

36. A computer-readable storage medium, configured to store a computer program, wherein the computer program is configured to enable a computer to execute operations of the method as claimed in any one of claims 1-14.

37. A computer program product, comprising a computer program instruction, wherein the computer program instruction is configured to enable a computer to execute operations of the method as claimed in any one of claims 1-14.

38. A computer program, configured to enable a computer to execute operations of the method as claimed in any one of claims 1-14.
